Europäisches Patentamt

European Patent Office

Office européen des brevets

(11) Publication number: **0 059 469**
**B1**

## EUROPEAN PATENT SPECIFICATION

(45) Date of publication of patent specification: **30.01.85**

(21) Application number: **82101585.6**

(22) Date of filing: **02.03.82**

(51) Int. Cl.⁴: **H 04 M 1/57**

(54) System for forwarding along a telephone connection the identities of the subscribers involved in that connection.

(30) Priority: **03.03.81 IT 6728981**

(43) Date of publication of application:
**08.09.82 Bulletin 82/36**

(45) Publication of the grant of the patent:
**30.01.85 Bulletin 85/05**

(84) Designated Contracting States:
**DE FR GB NL SE**

(56) References cited:
**DE-A-2 600 105**
**GB-A-1 170 331**
**GB-A-2 014 825**
**US-A-3 812 296**

(73) Proprietor: **CSELT Centro Studi e Laboratori Telecomunicazioni S.p.A.**
**Via Guglielmo Reiss Romoli, 274**
**I-10148 Turin (IT)**

(72) Inventor: **Bertoglio, Ottavio**
**C. so Monte Cucco 125**
**Turin (IT)**

(74) Representative: **Riederer Freiherr von Paar zu Schönau, Anton**
**Freyung 615 Postfach 2664**
**D-8300 Landshut (DE)**

Courier Press, Leamington Spa, England.

## Description

The present invention concerns a system for forwarding along a telephone connection the identities of the involved parties.

In a telephone network the availability of the identities of both the calling and the called party along the whole connection between said parties would provide a number of advantages and allow new services.

For instance:

— at the level of the cord, which means the device which provides the supply for the calling and the called parties, or of the incoming translator for connection to a rural exchange the calling party identity could be used to class him and provide him with special facilities such as complete documentation, teletaxe or barring of services;

— at the level of the metering device, the knowledge of the calling party identity could allow the documentation of the trunk-dialled traffic and the generation of metering pulses taking into account the call origin without resorting to separate inputs for each direction;

— at the level of outgoing or incoming translator, the measures of traffic by destination could be completed with the origin indication;

— at the level of the called party the knowledge of the calling party identity could help to trace malicious calls;

— at any stage of the switching network the possibility of comparing the passing digits with the identity of the subscriber actually reached could allow the ascertainment of possible routing errors in the downstream devices.

It is known that in telegraph networks, each of the two connected parties may request at any time from the other one the automatic transmission of his identity, and the mutual communication of the identities is an essential step of the procedure of establishment and validation of the connection; on the contrary in telephone networks the identities of the two parties is known only to a centralized unit (the computer, in case of stored-program control electronic exchanges or of electromechanical exchanges with service computer), whereas in the traditional exchanges the calling party identity is not known in any place past the cord, and the called party identity is known only until the selection completion.

In any case it is very complicated to extract the information from the possible centralized unit or from the points where the information is present, to store it and to forward it to the utilization point.

The idea has already become known (DE—A 26 00 105) that selected subscribers, especially coin-operated public telephones, are associated with an identity generator which is activated by special authorized called subscribers to which receivers for identity signals including generators of requests for identity signals are associated. After requesting the identity signal between the ringing rhythm bursts, the transmitter sends its identity signal which may be a serial digital signal and is received by the receiver of the called authorized subscriber, if such subscriber has been selected. However, the prior publication does not give a proper teaching how to implement this idea, particularly in case that not only selected ones but all subscribers participate in the system.

The present invention is to provide a relatively simple and cheap system allowing each of the two parties involved in the connection to automatically generate, upon request, a signal representative of his own identity, this identity signal being in the following simply termed "identity", and to forward it along the telephone connection to the other party or to any device inserted in the connection itself.

Starting out from a system as known from DE—A 26 00 105, for forwarding ac modulated identity signals along a line connection in a telephone network, the identity signals informing of the identities of points of origin and/or destination of a telephone call along the connection, the system comprising:

— a set of generators requests for an identity signal transmission associated with points of the network enabled to such a request and comprising a signal frequency oscillator;

— a set of identity generators associated each with such points which can originate the call or give access to the network, each generator comprising means for recognizing an identity request and comprising memory means storing the identity signal of the point the generator is associated with, and being capable of automatically forwarding along the connection, upon recognition of a request for identity transmission, the identity of the point it is associated with;

— a set of identity signal receivers associated with a number of network points enabled to the reception, the invention is characterized in that each of said generators of requests for an identity signal transmission is connected through a switch to the telephone line for the whole request duration and comprises a monostable circuit controlling the request emission and the operation of the switch; that each of said identity signal generators is connected to the telephone line through a differential transformer for picking up from the line the request for an identity signal transmission and through a switch which breaks the line switching it either towards the connection ends, during the conversation, or towards the generator itself, during the identity transmission; and that each identity signal receiver is connected to the telephone line by means of a differential transformer for picking up from the line the signals representing the identity and comprises a random-access memory storing the received identity signal.

For a better understanding reference is made to the annexed drawings, in which:

Fig. 1 is a schematic representation of a telephone connection equipped with the system according to the invention, in which the generator of the identity is provided only for the calling party and the identity request generator and the identity receiver are located at the called party's.

Fig. 2 is a block diagram of the identity request generator;

Fig. 3 is a block diagram of the identity generator;

Fig. 4 is a circuit diagram of a part of the generator shown in Fig. 3;

Fig. 5 is a waveform chart of a number of signals relative to the operation of the circuits of Fig. 4;

Fig. 6 is a block diagram of the identity receiver;

Fig. 7 is a circuit diagram of a part of the receiver shown in Fig. 6;

Fig. 8 is a waveform chart of a number of signals relating to the operation of the circuits of Fig. 7;

Fig. 9 is a schematic representation similar to that of Fig. 1, in which however the identity generator is provided for both parties;

Fig. 10 is a block diagram of a filtering system in the circuit of Fig. 7;

Fig. 11 is a schematic representation of a number of telephone connections equipped with the system according to the invention in a conventional network, with different arrangements of the system devices;

Fig. 12 shows the application of the invention to a connection associated with a traffic measuring apparatus;

Fig. 13 is a representation similar to Fig. 11, yet relating to a network with a service-computer;

Fig. 14 is the scheme of the filtering unit used in the connection shown in Fig. 13;

Fig. 15 shows a variant of the connection of Fig. 13;

Fig. 16 is a block diagram of the identity generator associated with the connections of Figures 13 and 14;

Figs. 17, 18 are circuit diagrams of parts of the generator of Fig. 16;

Fig. 19 is a partial circuit diagram of a variant of the receiver circuits, in case a check character is used; and

Fig. 20 is a partial circuit diagram of a variant of the identity generator for party-line subscribers and of the relevant connections to the line.

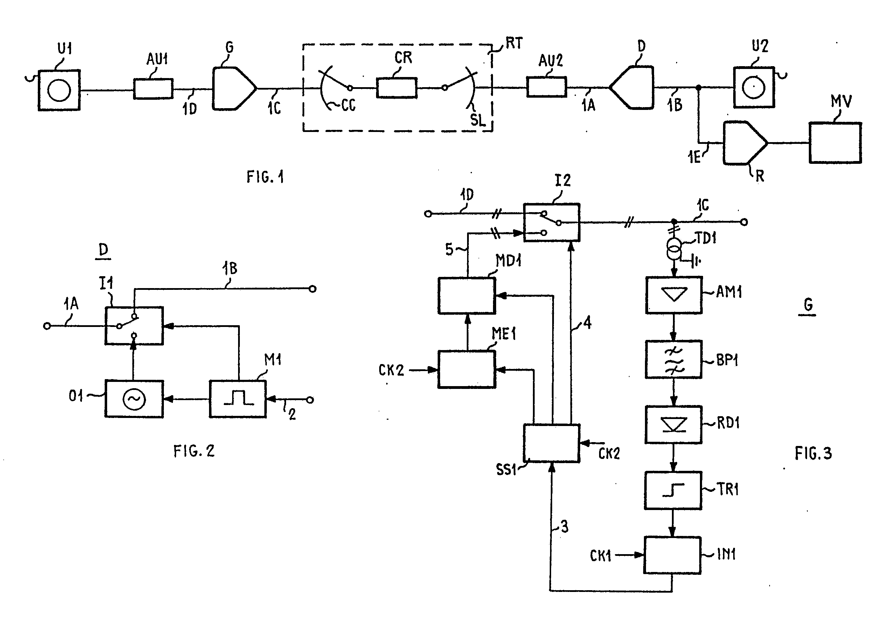

To illustrate the basic invention principles, Fig. 1 shows the insertion of the invention in a telephone connection between a calling subscriber U1 and a called subscriber U2 through a network RT, schematized by a finder CC, a cord CR and a line selector SL.

References AU1, AU2 denote the subscribers' line circuits and 1A—1E a number of sections of the telephone connection.

The system of the invention consists, from the operational point of view, of three blocks G, D, R.

Block G comprises the means apt to recognize a request that the subscriber's identity be sent on the line (identity request), the means apt to generate and transmit said identity, and the means designed to isolate from the line the subscriber while the identity is being transmitted. Even if in the drawing block G is represented only for calling subscriber U1, such a block must be provided for all the subscribers, as each of them may be in turn the calling or the called party. Here however only this hypothetical case of a single block G will be considered in order to better point out the invention features.

In order that no connection within a network lacks the calling subscriber's identity, identity generator G must be provided not only for the actual subscribers, but also for all those devices that in the exchange may originate a call or give access to the network. In particular, such generator must be associated with:

— all the subscribers' line circuits, including those not available for incoming calls or the test circuits, and all the PABX's, directly connected to group selectors;
— all the test devices which can set up calls without passing through the subscribers' line circuits (unless they are connected in parallel to an already established telephone connection);
— all the artificial test call generators which set up calls originating from devices different from the subscribers' line circuits;
— all the operator's translators;
— all the incoming and outgoing translators for connection to the international network;
— possibly the subscribers of the PABX's, in case the identity of the line seized towards the public network is not sufficient.

To make the description simpler, hereinafter reference will be made to "calling subscriber" and "called subscriber" to indicate the points of origin and destination of the call, even if, as explained, such points do not coincide with actual subscribers' sets. By way of example, the Figure shows a connection between two actual subscribers, with identity generator connected downstream the subscriber's line circuit. It is essential that generator G be located in the telephone exchange, even if it is associated with an actual subscriber, to prevent frauds or the use of non identifiable telephone sets.

As to the signal to be used for the identity transmission, as such transmission takes place on the voice path, it is clear that the only possible form not subject to limitations is that of a code with voice band carrier. Taking into account that the identity transmission requires a temporary interruption of the telephone connection, the code and the transmission speed have to be chosen so that the interruption does not disturb too much a possible conversation.

For instance, under the assumptions that a subscriber's identity is represented by 16 digits, that a telegraphic code of five bits per digit plus start and stop (i.e. 8 bits per digit as a whole) is used and that such a code is transmitted at 300 bauds, the transmission time stretch, and consequently the interruption time stretch, would be of about 300—400 ms, which is certainly tolerable.

Encoding the identity by 16 digits.not only allows the identification of all the subscribers of the national network but also leaves some digits available for check purposes or for other further uses (e.g. international codes in case of possible extension of the system to international networks). Similarly, the transmission of 5 bits per digit allows considerable redundancy.

Block D comprises means capable of generating the request (which will consist of a frequency or of a combination of frequencies in the voice-band for the same reasons which require the use of the voice-band for the identity transmission), and means to isolate the subscriber from the line while the request is being sent.

Taking into account that the voice path is interrupted while the request is being sent, the request signal must have such a duration as not to disturb a possible call, but such as to allow a sure recognition of the request by device G; for instance the request can last for about one hundred milliseconds.

By the use of the voice-band for sending the request, it may happen that the request is simulated by the voice during a conversation, so that generator G of the calling subscriber's identity may be operated and the voice path may be interrupted for the time necessary to send the identity; yet, as explained, this does not seriously disturb the conversation.

Generator D ought to be both manually and automatically operable still keeping the same structure for cost-saving reasons. The manual request will be made by the actual subscribers (e.g. for malicious call tracing) who must have the generator D at their premises, as shown in the drawing. The automatic request can be made by exchange devices, for instance to know the identity of the calling subscriber even in case of unanswered calls, for metering purposes, for traffic measurements, for supervising purposes, etc.: in this case the request generator D will be placed in the exchange and will be for instance associated with the cord, with intermediate devices along the connection, with the line selector or with possible supervision or traffic measuring devices.

Receiver R must have a structure similar to that of the receiving part of the identity generator G, as far as signal recognition is concerned, and will comprise memory means whose content can be sent for instance to displaying or recording devices or the like, schematically represented by block MV. In case the connection of Fig. 1 relates to two actual subscribers, receiver R and device MV will be placed at the subscriber's in case he is enabled to receive the information on the identity, otherwise they will be placed in the exhange; they will obviously be placed in the exchange in all other cases.

Fig. 2 shows that block D basically comprises a monostable circuit M1, an oscillator O1 which generates a request signal $f_1$ in the voice band, and a switch I1 which, upon command of monostable M1, connects section 1A of the telephone loop to oscillator O1 (for the whole duration of a request) or to section 1B of the telephone loop, i.e to the subscriber's set. Wire 2 represents the control input of monostable M1, which will be connected for instance to a push-button (for the manual request) or to the suitable exchange device, for the automatic request.

Switch I1 can be a relay or a static component.

In Fig. 3 identity generator G is connected to the telephone line on the input side through a decoupling transformer TD1 and on the output side through a switch I2 which switches the connection of section IC of the line from the generator, when the identity is to be sent, to line section 1D towards the subscriber during the conversation.

Decoupling transformer TD1 is followed by an amplifier AM1, by a band-pass filter BP1 tuned on the frequency of signals $f_1$ emitted by request generator D, by a detector RD1 and by a threshold (or trigger) circuit TR1 which converts the output signal of RD1 into a square wave.

Through an integrator IN1 designed to distinguish the actual identity request from noises, circuit TR1 is connected via an output wire 3 to a logic network SS1 (start-stop logic) determining the beginning and the end of the identity transmission operations.

Logic SS1 controls: switch I2 (via wire 4); a read only memory, schematized together with its control circuits by block ME1, storing the subscriber identity; a modulator MD1 the output 5 of which is connected to a fixed contact of switch I2 and which converts the identity read from memory ME1 into voice-band signals suitable for the transmission on line 1C.

A clock device, not shown, supplies the timing signals for integrator IN1, start-stop logic SS1 and the memory control circuits.

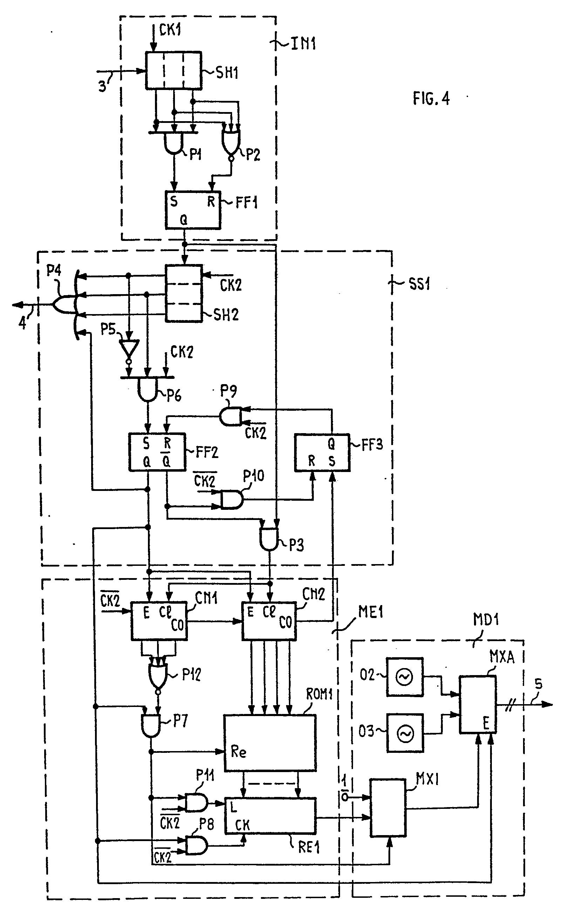

Fig. 4 shows in further detail circuits IN1, SS1, ME1, MD1. Here, the input of a shift register SH1, for instance a 3-bit shift-register, is connected to output 3 of threshold circuit TR1; SH1 is controlled by a signal CK1 with a sufficiently short period with respect to the duration of an identity request (i.e. 1/5—1/10 of such a duration). The outputs of the three cells of SH1 are connected to the inputs of an AND gate P1 and of a NOR gate P2, the outputs of which are respectively connected to the set and the reset inputs of a set-reset (S—R) flip-flop FF1.

FF1, together with SH1, P1, P2, forms integrator IN1. In fact with the depicted arrangement output Q is activated when three consecutive samples of the signal present on wire 3 are at logic level 1, and is disactivated upon the occurrence of three consecutive 0's, so that the influence of noises on the line eliminated.

Output Q of FF1 is connected on the one hand to an input of an AND gate P3 and to the line of a second shift register SH2, both belonging to start-stop logic SS1. The output of gate P3 is connected to the clear inputs of two counters CN1, CN2 belonging to ME1, which enable the reading from and control the addressing of read only memory ROM1 storing the subscriber's identity. The tasks of gate P3 will become clear from the following description.

Shift register SH2, this too for instance a 3-bit shift register, is controlled by a signal CK2, whose period corresponds to the bit duration in the transmission on the line of the subscriber's identity and is a multiple (for instance 7—8 times) of that of CK1. The outputs of the three cells of SH2 are connected to as many inputs of a four-input OR gate P4, whose output is wire 4 forwarding the control signal to IN2 (Fig. 2). Register SH2 acts as a delay line: in particular it must keep the control signal present on wire 4 up to the activation of the fourth input of P4 which, as will be seen hereinafter, will keep this signal present for the whole duration of the identity transmission. The output of the first cell of SH2 is also connected, through an inverter P5, to a first input of an AND gate P6, which has a second input connected to the output of the second cell of SH2 and is enabled by signal CK2; by this arrangement P6 is capable of recognizing the trailing edge of an identity request, that is the end of the request itself.

The output of P6 is connected to the set input of a second S—R flip-flop FF2 which acts as general set for the identity transmission. To this aim output Q of FF2 is connected: to the fourth input of P4; to the enable inputs of counters CN1, CN2; to an input of two 2-input AND gates P7 and P8, which too belong to ME1 and whose functions will become clear hereinbelow; to the enable input of an analog multiplexer MXA, belonging to modulator MD1. The reset input of FF2 is connected to the output of an AND gate P9 which receives at a first input signal CK2 and has a second input connected to output Q of a third S—R flip-flop FF3, the set input of which is connected to the carry-out (carry-over) of counter CN2.

Output $\overline{Q}$ of FF2 is connected both to a second input of P3, so as to prevent the reset of counters CN1, CN2 in case a second identity request arrives while the first one is handled, and to an input of a further AND gate P10, which is enabled by signal $\overline{CK2}$ and has its output connected to the reset input of FF3.

Shift register SH2, gates P3—P6, P9, P10 are flip-flops FF2, FF3 form the start-stop logic SS1.

In block ME1, the outputs of the stages of CN1 are connected, through NOR gate P12, to a second input of AND gate P7, the output of which is connected to the read-enable (Re) input of a memory ROM1: by this arrangement, upon the starting or the identity transmission (output Q of FF2 at "1") the reading in ROM1 is enabled when the content of CN1 is 0.

The carry-out of CN1 is connected to the control input of CN2, whose count forms the address for the reading in ROM1. According to the hypotheses made, ROM1 will contain sixteen 8-bit words or characters, the first bit being 1 and forming the start, and the last two bits, both at logic level 0, being the stop.

By this arrangement, CN2 will be a 4-bit counter and will count the emitted characters, while CN1 will be a 3-bit counter and will count the bits in a character.

The output of gate P7 is further connected, through AND gate P11 enabled by the signal $\overline{CK2}$, to the load input of a register RE1 which loads in parallel the eight bits of a character and is read in series under the control of signal CK2, sent to RE1 through gate P8.

The output of RE1 is connected to a first input of a multiplexer MX1 belonging to MD1; a second input is steadily connected to a logic level "1"; multiplexer MX1 is controlled by the output signal of P7 so as to switch through the signals present on such second input when P7 is enabled.

The output of MX1 is connected to the select of analog multiplexer MXA, which has two inputs connected to two oscillators O2, O3 generating two frequencies $f_2$ and $f_3$, respectively, lying within the voice band, one frequency being used to transmit the 1's and the other the 0's of the characters encoding the identity: it has therefore been assumed that modem MD1 (just consisting of MX1, MXA, O2, O3) is an FSK modem.

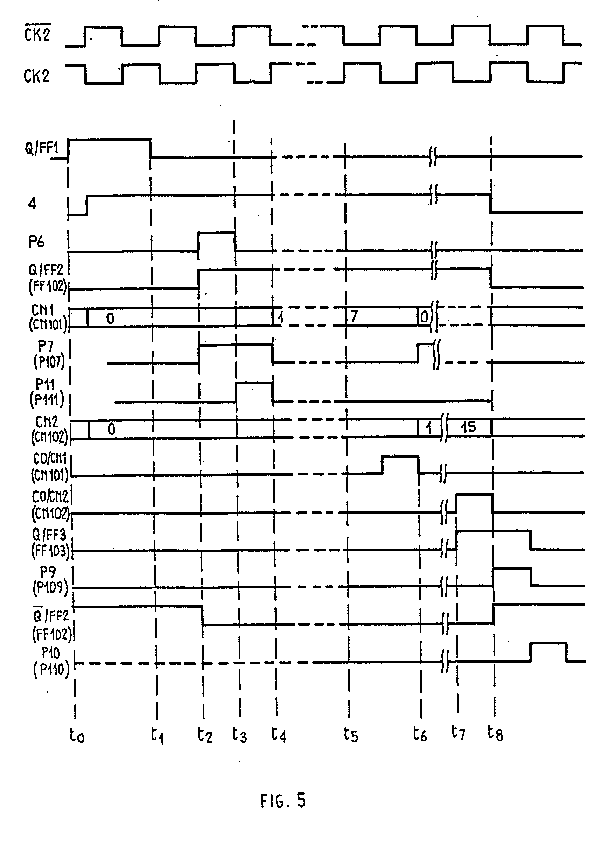

The operation of the generator G is now described with reference also to the chart of Fig. 5, which shows a number of signals useful to the understanding of the operation itself.

In that Figure, rows Q/FF1, Q/FF2 and $\overline{Q}$/FF2 show the signals present on the corresponding outputs of the various flip-flops; the rows denoted by the same reference of a gate show the output signal of the gate itself; rows CN1 and CN2 denote the count reached by the homonymous counters; rows CO/CN1 and CO/CN2 are relative to the carry-out of the counters; row 4 relates to the signal present on the homonymous wire.

Fig. 5 takes into account that the shift in the shift registers and the advance of the counters are controlled by the falling edges of the clock signals.

The signals present on section 1C of line 1, to be forwarded towards subscriber U1, are picked up through transformer TD1 (Fig. 3), amplified in AM1, filtered in BP1, rectified in RD1 and converted into a square wave in TR1. The square wave is sampled at the frequency of signal CK1, and the samples are loaded into SH1 (Fig. 4). If the identity request is present on the line, and consequently the square wave outgoing from TR1 (Fig. 3) is at 1, after the third sample of logic value 1 flip-flop FF1 (Fig. 4) is set and its output Q goes to 1 (instant $t_0$, Fig. 5).

The transition to 1 resets counters CN1, CN2 through gate P3, which is enabled as output $\overline{Q}$ of FF2 is 1 (in fact, FF2 receives a pulse at the set input only at the end of the request and till this moment its output $\overline{Q}$ is 1, as a result of a reset at the end of the previous request).

The logic "1" present at output Q of FF1 is also stored into the first cell of register SH2 in correspondence with the first falling edge of CK2 subsequent to instant $t_0$, thereby bringing to 1 the signal at the output 4 of P4 and switching switch I2 (Fig. 3) so as to connect the line section 1C to output wire 5 of modem MD1.

For the whole request duration the situation keeps unchanged, since possible noises bringing to 0 the signal on wire 3 for a time shorter than three periods of CK1 do not affect output Q of FF1 (Fig. 4).

Upon recognition of the end of the request, that is after the loading of three consecutive 0's in SH1, a 1 is present at the reset input of FF1, whose output Q goes to 0 (instant $t_1$).

At the arrival of the first negative-going edge of CK2 subsequent to instant $t_1$, that bit 0 is stored in the first cell of SH2, whose second cell still contains a 1. At the subsequent positive-going edge of CK2 this situation causes the output of P6 and therefore output Q of FF2 to go to 1 (instant $t_2$).

The bit 1 present at the fourth input of P4 keeps at 1 the output thereof also after the loading of the third 0 in SH2, and besides enables counters CN1, CN2, gates P7, P8 and multiplexer MXA. As at this instant the contents of the three cells of CN1 is 0, the outputs of P12 and P7 go to 1, and thus the reading in ME1 of the first character (address 0000) is enabled.

The read enable of ME1 connects the output of MX1 to the input that is permanently at 1, thereby causing the emission on wire 5, through MXA, of the frequency associated with logic value 1 (for instance the frequency generated by 03) which acts as "start".

At the next positive-going edge of CK2 (instant $t_3$) P11 causes the loading of the character into RE1 and at the negative-going edge (instant $t_4$) P8 starts the bit-by-bit reading of that character; at the same time CN1 is advanced by one step and its count corresponds to number 1. As a consequence the outputs of P12 and P7 go to 0, so that the reading in ROM1 is disabled and the output of MX1 is connected to the input connected to RE1; the bits of the character will then drive MXA so as to transmit either frequency on output 5. As the start has been previously transmitted, the first bit of the character is not read.

The situation remains unchanged until the arrival of that pulse of CK2 which by its trailing edge causes the count of CN1 to reach decimal value 7 (instant $t_5$). At the subsequent positive-going transition of CK2 the carry-out signal of CN1 is emitted; at the end of that signal (instant $t_6$) CN2 is advanced by one step, so that the second character is addressed in ROM1; also CN1 is advanced by one step and counts again number 0, thereby enabling the reading of this second character in the same way as for the first one.

The whole process repeats identically until the reading of the last bit 16th character. At the first leading edge of CK2 subsequent to the counting of CN1 relative to said last bit, the carry-out signal of CN2 is emitted (instant $t_7$), and sets output Q of FF3 to 1. At the next positive-going transition of CK2 (instant $t_8$) through P9, that bit 1 is applied to the reset input of FF2 thereby resetting output Q and setting output Q to 1. As a consequence also the fourth input of P4 goes to 0, bringing output 4 to 0 and then restoring the voice path continuity. Multiplexer MXA is disabled.

At the subsequent leading edge of $\overline{CK2}$, FF3 is reset through P10, thereby resetting the whole circuit.

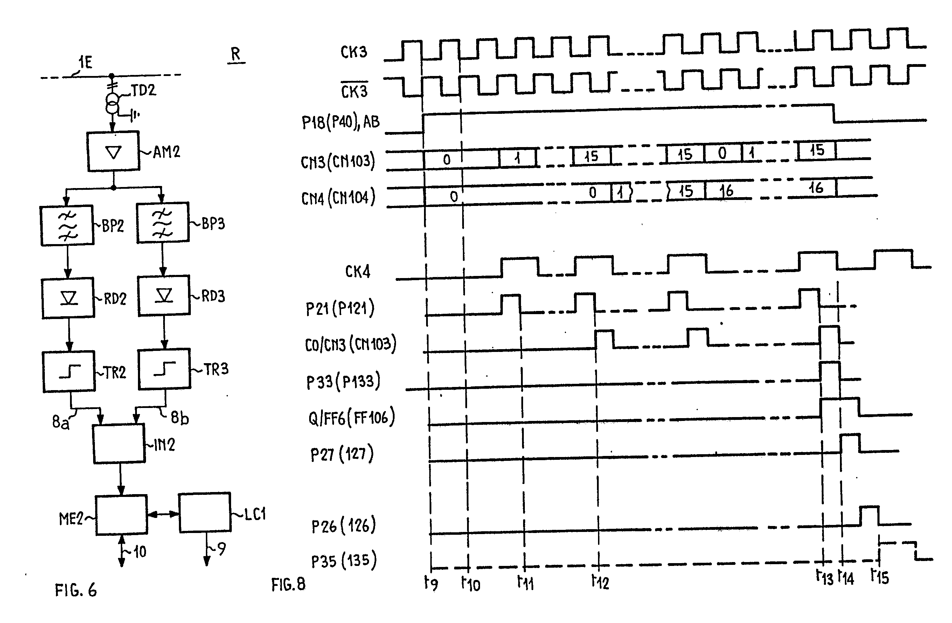

In Fig. 6, receiver R apt to receive the calling subscriber identity transmitted as described with reference to Fig. 4, is connected to line section 1E through decoupling transformer TD2 the output of which is connected to an amplifier AM2. The output of AM2 is connected to the input of two band-pass filters BP2, BP3, tuned on frequencies $f_2$, $f_3$, respectively, and followed by rectifiers RD2, RD3 and trigger circuits TR2, TR3.

Outputs 8a, 8b of circuits TR2, TR3 are connected to an integration logic IN2 implemented so as to maintain a valid signal present till the recognition of a valid signal of opposite logic value. The output of the integration logic is connected to the control circuits of a random access memory represented together with such circuits by block ME2.

Memory ME2 is also associated with a check logic LC1 which checks the correctness of the individual characters and the transmission regularity, forwarding to the utilizing devices, through its output 9, either a signal denoting the successful transmission or an alarm signal. Line 10 schematizes the memory connections to the utilizing devices for data reading.

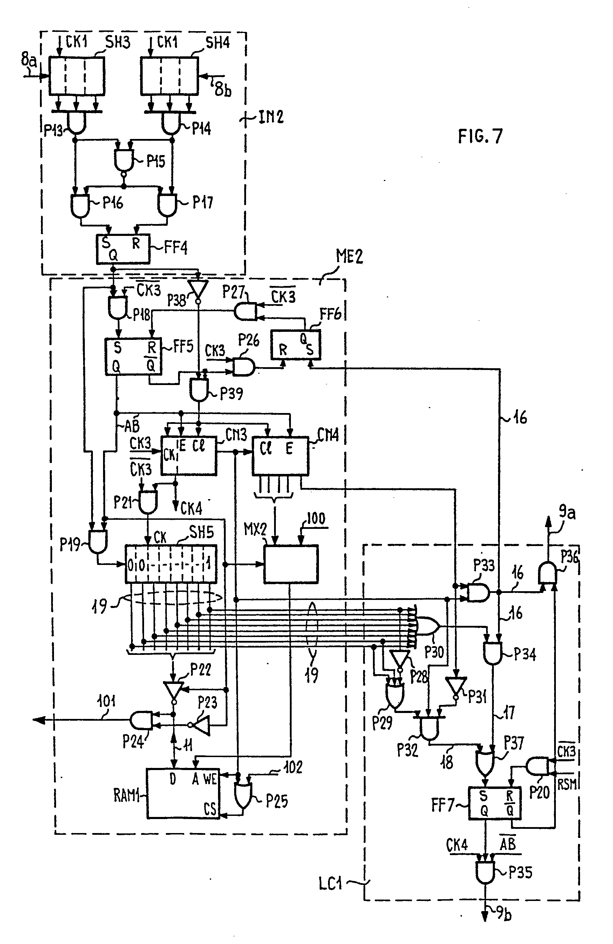

Devices IN2, ME2, LC1 are represented in further details in Fig. 7.

Outputs 8a, 8b of trigger circuits TR2, TR3 are connected to the inputs of shift registers SH3, SH4 which are e.g. 3-bit shift registers identical to SH1 (Fig. 4) and are controlled by a signal having the same period as CK1.

To render the description simpler this signal is still denoted by CK1 even if it is clear that it is generated by a time base in the receiver.

The outputs of the three cells of SH3 and SH4 are connected to the inputs of respective AND gates P13, P14 whose outputs are connected to a first input of AND gates P16, P17, and to the inputs of a NAND gate P15, whose output is connected to a second input of P16, P17. The output of P16 is connected to the set input of an S—R flip-flop FF4 while the output of P17 is connected to the reset input of FF4.

SH3, SH4, P13—P17 and FF4 form together the integrator IN2; in fact with the arrangement described, a bit 1 will be present at the output of gates P13, P14 after three consecutive samples of logic level 1 of the signal on wire 8a or 8b. Gates P15, P16 and P17 act so that, after the transition to 1 or respectively to 0 of the output of FF4 upon the recognition of either a bit 1 or a bit 0 by P13, P14, such state is kept present up to the next valid signal, as can be easily deduced.

Output Q of FF4 is the input of block ME2; it is connected to a first input of two 2-input AND gates P18, P19 and to an inverter P38 which, through a further 2-input AND gate P39, is connected to the reset inputs of two counters CN4, CN5 respectively with three and four stages; the tasks of these counters will be described hereinafter. Gates P38, P39 have the task of preventing the reset of the counters if a message arrives while a preceding message is being received.

Gate P18 receives at its second input, from the receiver time base, a signal $\overline{CK3}$ with period equal to half the bit time, and has the output connected to the set input of an S—R flip-flop FF5. Output Q of FF5 is connected: to a second input of P19; to the enable inputs of CN3, CN4; to a bus driver P22 and to an inverter P23 which, together with an AND gate P24, allow respectively the data storage into the memory or the emission of the data stored; and to the select input of a multiplexer MX2. Signal AB present at output Q of FF5 is an enabling signal for a number of circuits of ME2.

Output $\overline{Q}$ of FF5 is connected to the second input of P39 and to an input of an AND gate P26, enabled by signal CK3; the output of P26 is connected to the reset input of an S—R flip-flop FF6, whose set input is connected to output 16 of a gate P33, belonging to LC1; on such output a signal denoting the end of a message is present.

Output Q of FF6 is connected to an input of a further 2-input AND gate P27, enabled by signal $\overline{CK3}$; the output of that gate is connected to the reset input of FF5. Gates P26, P27 and flip-flop FF6 carry out the same functions as devices P10, FF3 and P9 of Fig. 4.

Under the hypotheses made for the identity encoding, the random access memory RAM1 will have a capacity of sixteen 8-bit words. The data to be written, present on the output of flip-flop FF4, are sent to the memory through gate P19, a shift register SH5 read in parallel, the output wires 19 of SH3, circuit P22 driving data bus 11. The data read are sent outside, as mentioned, through data bus 11 gate P24, and output 101 of P24. Of course, even though in the drawing P22 and P24 are shown by a single gate, these elements will comprise a gate for each wire of the bus.

The addresses for the memory are supplied through multiplexer MX2, which has its first input connected to the outputs of the stages of counter CN4 assigned to the four least significant bits, for the write addresses, and a second input connected to the utilizing devices (connection 100) for the read addresses. The memory operation is enabled through OR gate P25 either by the carry-out of counter CN3, or by the reading devices (wire 102); the carry-out of CN3 acts as a write command in the memory and as a clock signal for CN4.

Counter CN3, which is timed by signal CK3, is utilized as counter of the character bits; to this aim, the output of its first stage, on which signal CK4 with period equal to the bit time is present, is connected to the clock input of SH5, through gate P21 enabled by CK3. As signal CK4 enables also the emission of the alarm signals, it must be present also after the arrival of the last character, as will be seen hereinafter. To this aim the first stage of CN3 must be independent of the enabling.

Counter CN4 acts as address counter for writing in RAM1. The output of the fifth stage of CN4 is connected to an inverter P31 and to an input of a 2-input AND gate P33 of the control logic LC1. In LC1, an OR gate P29 checks the character regularity, i.e. checks the correctness of the start and the stop; to this aim two inputs of P29 are connected to those wires of connection 19 on which the stop bits are present, and a third input is connected through an inverter P28 to the output wire of the cell of SH5 assigned to the start bit.

The output of P29 is connected to an input of a three-input AND gate P32 of which two other inputs are connected respectively to the carry-out of CN3 and, through an inverter P31, to the output of the fifth stage of CN4. Output 18 of P32 is connected to an input of an OR gate P37, of which a second input is connected to output 17 of an AND gate P34 and the output is connected to the set input of a flip-flop FF7;

output Q of FF7 is connected to an input of gate P35, which receives at two other inputs signals CK4 and $\overline{AB}$. Output 9b of P35 forwards the possible alarm signal to the utilizing devices. The reset input of FF7 is connected to the output of AND gate P20, which has an input connected to a hand-operated reset device (RSM) and is enabled by signal $\overline{CK3}$; output $\overline{Q}$ of FF7 is connected to an input of an AND gate P36.

A second input of P37 is connected to output 17 of an AND gate P34; the two inputs of P34 are connected to the output of an OR gate P30, which has eight inputs connected to the eight output wires 19 of SH5, and to output 16 of AND gate P33, of which a second input is connected to the carry-out output of CN3. Output 16 of P33 is connected also to the set input of FF6 and to a second input of AND gate P36.

Output 9a of P36 forwards the signal indicating the transmission regularity to the utilizing devices.

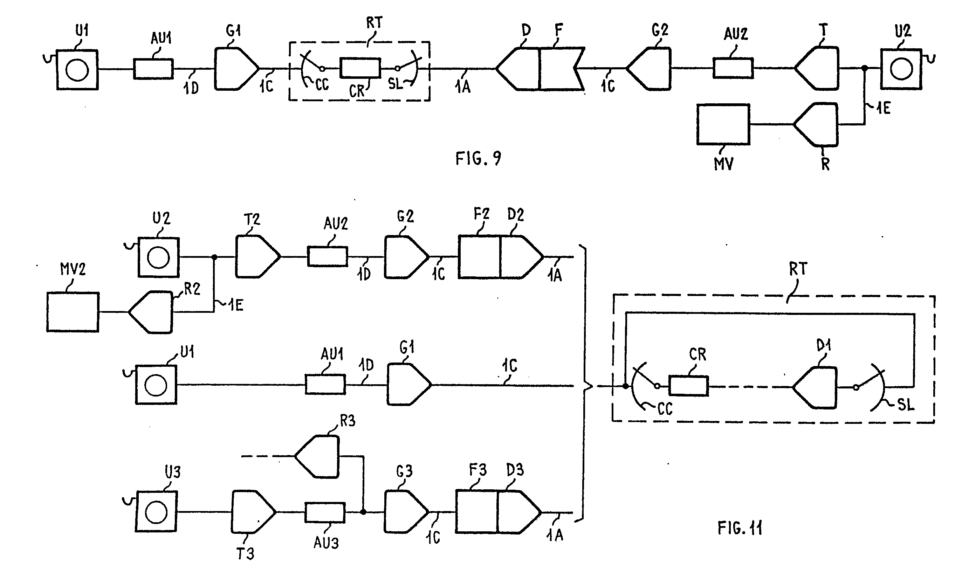

The receiver operation will be described now with reference to the waveform chart of Fig. 8.

The signal present on line section 1E is picked up by transformer TD2 and sent to the subsequent devices which process it as described for the receiving part of the identity generator. If the subscriber's identity is being transmitted, output 8a of TR2 will be active first, as the first bit of each character is 1. As a consequence gate P13 is operated upon reception of the third sample; if everything goes regularly, the output of P14 is 0 and therefore P16 is enabled and output Q of FF4 goes to 1. At the first leading edge of $\overline{CK3}$ the output of P18 goes to 1 (instant $t_9$) bringing to 1 output Q of FF5 (signal AB).

As a consequence multiplexer MX2 is positioned so as to switch through the address bits supplied by CN4 to the memory; counter CN3, CN4 (reset at the end of the previous message) are enabled; gate P19 is enabled too and as a consequence it can transfer the character bits to SH5, as they appear at the output of FF4. Taking into account the delay introduced by FF5, counter CN3 starts counting at the next trailing edge of CK3 (instant $t_{10}$); after another period of CK3, and still at the negative-going transition, CK4 becomes 1; in the half-period in which CK3 is 0 (and therefore $\overline{CK3}$ is 1), the output of P21 goes to 1, and at the trailing edge of the output pulse of such a gate (instant $t_{11}$) the first bit of the character is loaded into SH5. The operations repeat unchanged for the subsequent bits which are loaded into SH5 every two periods of CK3, when the impulses of CK4 and CK3 coincide.

When the carry out signal of CN3 is emitted, the 8th bit of the first character (instant $t_{12}$) is loaded into SH5. The carry-out signal causes the writing into memory RAM1 (inputs CS, WE at 1) at the address 0000 still present on the outputs of the first four stage of CN4 and therefore on the output of MX2.

At this point the check of the character regularity, that is the check of the start and stop correctness, is effected. If the bits in the first, seventh and eighth cell of SH5 are 1,0,0 respectively, the output of P29 is 0; therefore also the output of P32 remains 0 (even if the other two inputs are 1) as well as output Q of FF7. If the character was incorrect, the output of P29 will be 1 and will bring to 1 output Q of FF7 through P37; then gate P36 is disabled.

The whole procedure repeats for the subsequent characters. Once the 16th character has been loaded, the circuit is not immediately reset, but a 17th character is waited for (which character will of course consist of all 0's) to effect a check on the transmission regularity. Once the eighth bit of said 17th character has been loaded into SH5 the fifth output of CN4 is 1, and upon the emission of the carry-out signal by CN3 (instant $t_{13}$) the output of P33 goes to 1, resetting FF5 through FF6 and P27 (instant $t_{14}$).

If the transmission ends regularly, that is if eight 0's have been actually loaded in SH5, the output of P30 and therefore also the output of P34 are 0; as the received character is the 17th one, the outputs of P31 and P32 are 0. If none of the 16 characters of the identity had presented irregularities, output Q of FF7 is 0, and therefore output $\overline{Q}$ is 1. The signal present on wire 16 can then pass through gate P36 on wire 9a thereby signalling the regularity of the transmission.

If on the contrary, due to some irregularities, there is at least a bit 1 in SH5, the outputs of P30, P34, P37 are 1 and therefore the output of FF7 goes to 1 (or is kept at 1, if it was already 1 due to some irregularity in a character); gate P36 is disabled or is kept disabled, and in correspondence with the first pulse of CK4 subsequent to the reset of FF5 (instant $t_{15}$) the alarm signal is emitted through P35. FF7 is then manually reset, in coincidence with a pulse of $\overline{CK3}$.

FF5 is reset through P26, FF6, P27 as described for FF2 (Fig. 4); this reset requires no particular comments.

When the memory contents is requested by the utilizing devices, output Q of FF5 is 0 and then MX2 connects to the output its second input, connected to wires 100 carrying the addresses supplied e.g. by a counter like counter CN2 of Fig. 4. The memory is enabled also from the outside through wire 102; the simultaneous presence of a bit 0 at input WE and of a bit 1 at input CS is interpreted as a read command, and the data are transferred to the outside, through bus 11 and gate P24 enabled by the absence of signal AB through gate P23.

Fig. 9 shows the arrangement of the devices of the system according to the invention for a connection between two actual subscribers, both equipped with their own identity generators G1 or G2, identical to generator G of Fig. 1. For simplicity it is still assumed that only subscriber U2 is enabled to generate and receive the identity request.

As shown, once the connection has been set up, both identity generators G1 G2 are simultaneously connected in the voice path; if identity request generator D were still located as shown in Fig. 1, identity generators G2 would be actuated by the request emitted by the subscriber whom G2 is associated with. In order to avoid that, voice-band request generator D is connected downstream generator G2 (with reference to the propagation direction of the request) and is controlled, through a filtering system F, by a second generator T placed at the subscribers'; this second generator T has the same structure as generator D, yet its oscillator generates signals $f_4$ whose frequency is not within the voice-band; said signals, duly filtered in block F, control request generator D, without affecting generator G2 which, as said, is tuned on the frequency (in the voice band) of signals $f_1$.

Both generator T of requests outside the voice band and filtering system F are of course necessary only if generator D is associated with an actual subscriber.

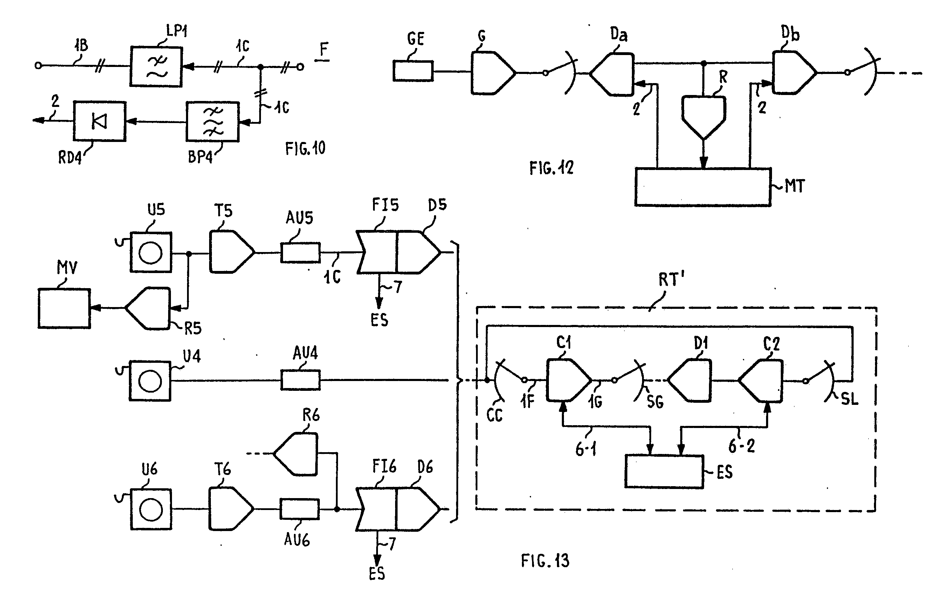

Filtering system F, shown in Fig. 10, will comprise for instance:

— a low-pass filter LP, connected between sections 1C and 1B of the speech path, to let through the speech only;
— a band pass filter BP4, connected in parallel with LP1 and tuned on the frequency of signals $f_4$;
— a detector RD4, connected to one side to the output of BP4 and on the other side to control input 2 of request generator D, to transform the frequency outgoing from BP4 into a d.c. signal.

Fig. 11 shows the different possible applications of the invention in a connection between actual subscribers. As in Fig. 9, subscriber U1 is only equipped with identity generator G1 and subscriber U2 is enabled both to request identities (through generators T2, D2 and filter F2, corresponding to devices T, D, F of Fig. 9) and to receive the identity information, as he is equipped with receiver R2 and possibly with displaying and recording device MV2. Subscriber U3 is enabled to request identities (and therefore he is equipped with devices T3, F3, D3), but is not enabled to receive the identity information. In this case the receiver is placed in the exchange. Still in the exchange, at the level of line selector SL generators D1 of identity requests are provided for the automatic request for the calling subscriber's identity at the end of selection.

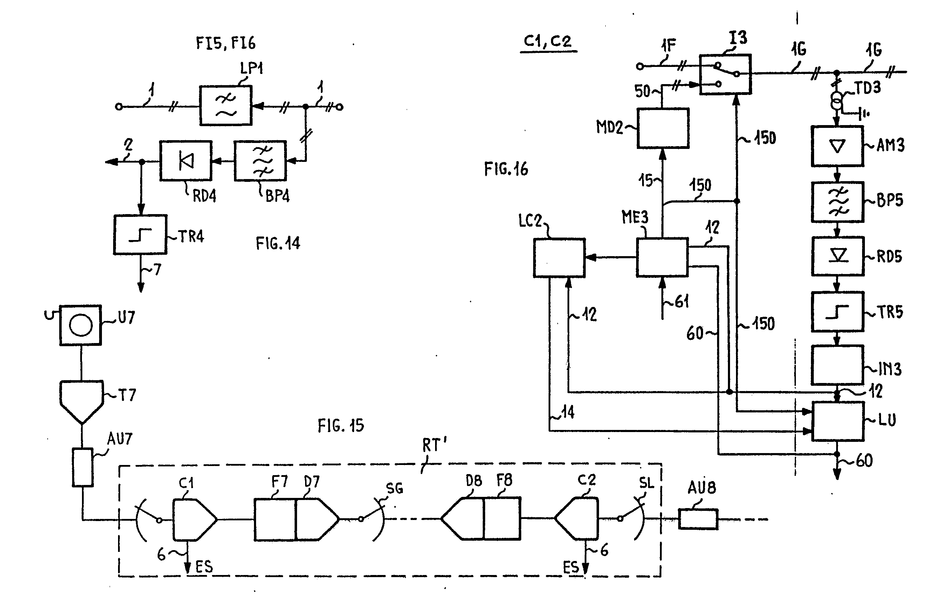

Fig. 12 on the contrary refers to the case in which the identity request generation is entrusted to a traffic supervising apparatus MT; in this case there are provided two request generators Da, Db controlled by apparatus MT and sending the request backward or forward, as well as a receiver R.

In the diagram of Fig. 12, the traffic supervising apparatus is associated with a connection coming from a network which is not equipped with the system of the invention; identity generator G of the upstream subscriber is in this case associated with the incoming links GE, to supply the indication of the call provenience.

The association of the invention with operators' switchboards is not represented on the drawings, as the connections are exactly alike that of subscriber U1, once the switchboard and the operator's cord have been substituted for the subscriber and his line circuit, respectively.

The description carried out so far relates to networks which are not controlled by a computer. In case of computer controlled networks or of networks associated with a service computer it has to be taken into account that these networks provide for identifying the subscribers and storing in the computer the identity of the subscriber that at a certain instant is connected to a given cord. As a consequence, the identity generators can be associated with the cords, rather than with the individual subscribers, and will be controlled by the computer which communicates the identity of the subscriber which has seized the cord. Some applications of the invention to computer-controlled exchanges are shown in Figures 13—18.

In Fig. 13, subscribers U4, U5, U6 are offered the same facilities as subscribers U1, U2, U3 of Fig. 11, with the only difference that the identities are generated by a centralized generator. A first generator C1 is connected at the cord level to communicate the identity of the calling subscriber; a second generator C2 can be inserted in correspondence of the line selector to forward along the voice path the called subscriber's identity; generators C1, C2 are connected to service computer ES through lines 6—1, 6—2; through said lines the generators forward to ES the identity requests coming either from request generators D5, D6 of enabled subscribers or from exchange device D1, and they will receive from ES the identity of the subscriber connected at that instant to the cord. The structure of generators C will be described hereinafter.

With the arrangement shown in Fig. 13, devices C1, C2 are downstream request generators D5, D6, therefore a request is to be prevented from actuating the identity generator associated with the cord whereto the requesting subscriber is connected. To this aim filtering systems F15, F16 associated with request generators D5, D6 will be they to connected to computer ES (through lines 7) and will communicate to it the occurred actuation of the request generator.

For instance, as shown in Fig. 14, a filtering system FI will still comprise devices LP1, BP4, RD4 described for filter F of Fig. 10; in addition, output 2 of rectifier RD4 will be connected to a threshold circuit TR4, whose output is wire 7 through which the computer will be informed of the occurred filter seizure.

As a consequence of such information the computer can inhibit in any convenient way the actuation of generator C associated with the requesting subscriber.

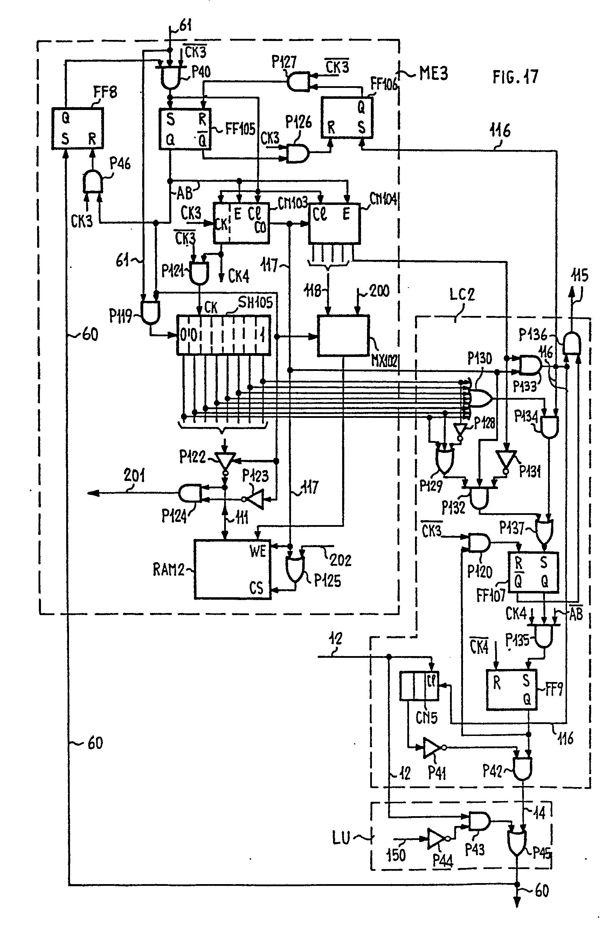

In the connection shown in Fig. 15, the request generators with their respective filtering systems are centralized at the level of the cord (block D7, F7) to allow requests by the calling subscribers, and/or of the line selector (blocks D8, F8) for the requests by the called subscribers, instead of being inserted at the subscriber level.

The centralized arrangement is convenient only if the number of subscribers enabled to the request is a sufficient percentage (e.g. 10%) of the global number of subscribers.

In this case the filtering system is downstream identity generator C, and therefore there is no risk for it to be actuated by requests originated upstream; therefore block F7, F8 will be implemented exactly alike block F of Fig. 10.

Fig. 16 shows that the receiving end of identity generators C1, C2 is similar to that of generator G of Fig. 3 and comprises circuits TD3, AM3, BP5, RD5, TR5, IN3 identical to circuits TD1, AM1, BP1, RD1, TR1, IN1 of Fig. 3.

Output 12 of IN3 is connected to: an output logic LU for sending the computer, through wire 60, the identity requests recognized as valid; a random-access memory, schematized with its control circuits by block ME3, which receives from the computer, through wire 61, the identity of the subscriber connected to the requesting party; a logic network LC2 which has tasks similar to those of the logic LC1 of Fig. 6 and in addition request the computer the re-transmission of an identity message where anomalies have been found out. To this purpose logic LC2 is connected via wire 14 to output logic LU whose output wire 60 is also connected to memory ME3, in order to enable the control circuit to receive a new identity message.

The connection between LC2 and ME3 are schematized by line 13.

Through a number of wires denoted as a whole by 15, memory ME3 is connected to modem MD2, identical to MD1; MD2 is in turn connected, through wire 50, to switch I3 which acts for line sections 1F, 1G as I2 (Fig. 3) acts for line sections 1C, 1D. One of the wires, denoted 150, outgoing from memory ME2, forwards to I3 the control signal to connect line section 1G to modem MD2; the same signal disables LU, to prevent further request from being sent to the computer while an identity is being transmitted.

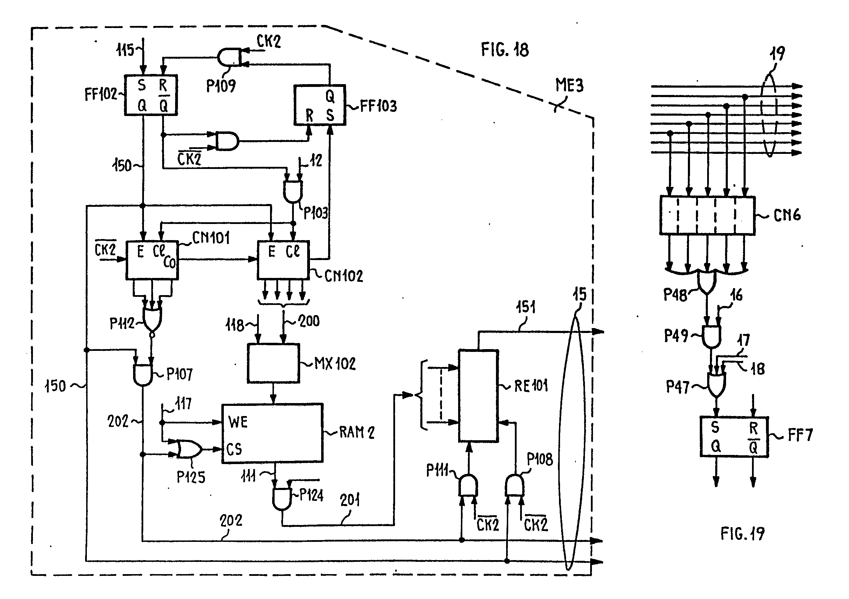

Fig. 17 shows memory RAM2 with that part of control circuit which manages the writing in said memory, control logic LC2 and output logic LU. In the control circuits a first input of a 3-input AND gate P40 is connected to wire 61 coming from the computer and carrying the identity to be written in RAM2; a second input of P40 is connected to output Q of an S—R flip-flop FF8 whose set input is connected to output 60 of logic LU. FF8 has the task of enabling the write control circuits only in presence of an identity request (or of a request for the repetition of a message, which is processed in the same way as the identity requests); the third input of P40 receives signal $\overline{CK3}$, like gate P18 shown in Fig. 7. The other devices of the write control circuits, i.e. gates P119, P121 to P127, flip-flop FF105, counters CN103, CN104, multiplexer MX102, bus 111, and wires or connections 116, 200, 201, 202, have tasks similar to the devices P19, P21 to P27, FF5, CN3, CN4, MX2, 11, 16, 100, 101, 102 of Fig. 7. The only difference is that output Q of FF105 is also connected, through an AND gate P46 enabled by CK3, to the reset input of FF8. In this way a possible identity request arriving at device C, while it is receiving from the computer an identity message on wire 61, is prevented from resetting counters CN103, CN104 whereby loss of the message being processed would have been caused. In addition, in comparison with Fig. 7, references 117, 118 have been added for the carry-out of CN103 and for the whole of the four less significant outputs of CN104.

In control logic LC2, devices P120, P128 to P137 and FF107 have the same functions as devices P20, P28 to P37 and FF7 of Fig. 7; the only differences are that output 115 of P136 which signals the successful transmission is connected to the circuits controlling the memory reading and that the reset of FF107 is no longer manual, but it is obtained through a signal generated inside the logic itself to allow, in case of irregularities in the transmission between the computer and memory ME3, the repetition of the transmission itself. To this purpose the output of P135 is connected to the set input of a flip-flop FF9, which receives at the reset input signal $\overline{CK4}$; output Q of FF9 is connected to the input of P120 to reset FF107 and in addition is connected to an input of a 2-input AND gate P42, of which a second input is connected through inverter P41 to the carry-out of a counter CN5, which determines how many times the transmission of an identity can be repeated by the computer in case of irregularity. For instance CN5 can be a modulo-3 counter. To perform its tasks CN5 has its clock input connected to output 116 of P133; the reset input will be connected to output 12 of integrator IN3 (Fig. 16).

The output of gate P42 (wire 14) is connected to a first input of a 2-input OR gate P45 of which the second input is connected to the output of an AND gate P43; gate P43 has two inputs connected respectively to output 12 of the integrator and, through an inverter P44, to a wire 150, coming from the circuits that control the reading in RAM2; this wire forwards a signal which, i.a., enables modem MD2 (Fig. 16) to transmit. In this way output logic LU, just consisting of gates P43, P44, P45, cannot forward to the processor new identity request while an identity stored as a consequence of a previous request is being read in memory RAM2.

As to the read control circuits, shown in Fig. 18 together with some devices already shown in Fig. 17 and represented again in order to make the description clearer, their structure is similar to that of the control circuits of memory ROM1 of Fig. 4. More particularly devices P103, P107 to P111, CN101, CN102, FF102, FF103, RE101 have functions similar to devices P3, P7 to P11, CN1, CN2, FF2, FF3, RE1 described in Fig. 4. The differences concern only some connections to the outside or towards the other devices of block ME3. More precisely, the set input of FF102 is connected to output 115 of gate P136, so that the reading is enabled only if the identity transmission by the computer has been regular; output Q of FF102 forms wire 150 which, besides disabling logic LU and enabling modem MD2, controls switch 13; the output wires CN102 are wires 200 connected to the second input of MX102 (Fig. 17); the data inputs of RE101 are connected to wires 201 outgoing from P124; output 202 of P107 is connected to gate P125 to enable the reading in RAM2, besides controlling the multiplexer which, in MD2 carries out the same functions as MX1 (Fig. 4); output 151 of RE101 transfers the data to the modem, as in Fig. 4. It is to be noted that data bus 111 has been here represented just as reading bus.

For the description of the operation of the circuits of Fig. 16, 17, 18 reference is made again to the waveform chart of Fig. 8, taking into account that the timing signals, even if denoted by the same symbols used in Figures 7, 8 as they have the same period, are generated by a time base of circuits C. The identity request is processed as in generator G; the integrated request, present on wire 12, is sent to the computer through gates P43 (enabled by the absence of signal on wire 150) and P45 and wire 60; in addition the signal on wire 60 is sent to FF8 and sets output Q to 1. After the beginning of identity transmission on wire 61 (which is supposed to occur subsequently to the end of the request transmission on wire 60), at the first positive-going transition of $\overline{CK3}$ (instant $t_9$, Fig. 8) the output of P40 goes to 1, thereby resetting counters CN103, CN104; then also the output of FF105 goes to 1, thereby enabling P119 and counters CN103, CN104 and resetting FF8, through P46; gate P40 is from now on disabled. From that instant to the end of the check on the transmission regularity the operations are identical to those described for the receiver R; moreover counter CN5 indicates that the subscriber's identity has been already transmitted once.

If the transmission has been regular, the signal emitted by P136 on wire 115 brings to 1 output Q of FF102 (Fig. 18), and the reading and the transmission in line of the subscriber's identity take place with the modalities described for the reading in ROM1 (Fig. 4).

In case of transmission irregularities, the output of P135 is 1 (Fig. 17), bringing to 1 also output Q of FF9.

The transition to 1 of this output resets FF107 through P120; besides through gate P42 (which is enabled as CN5 has not reached the terminal count), wire 14 and gate P45, this bit 1 passes onto wire 60 and is interpreted by the computer as a new identity request for the same subscriber; the same signal through FF8 enables again gate P40, which can receive the new message, which is processed as the previous one: if transmission irregularities have been found out, output Q of FF9 goes again to 1; P42 is still enabled because CN5 has not yet reached its terminal count and through P45 the request of repetition is sent to wire 60. At the retransmission end the output of CN5 goes to 1; was the transmission regular, this has no effect because also the output of FF9 is 0 and therefore P42 is inhibited; is also the third transmission irregular and therefore the output of FF9 is 1, the 0 present on the output of P41 disables gate P42; therefore the circuit remains blocked till a new identity request on wire 12 resets CN5.

The above description of devices G, C, R has been made under the supposition that the sixteen characters encoding the subscriber's identity are all information characters. However, as mentioned, at least for a network like the Italian network, such encoding is certainly redundant, that is why a character could be used to check in logics LC1, LC2 also the correctness of a message content, in addition to the formal correctness of the individual characters and to the actual transmission end. For instance the check modalities known as "check sum" could be adopted, according to which the modulo-2 sums, without carry over, of the information bits of equal position in all the information characters of a message must be all 0's or all 1's depending on whether the odd or even parity is chosen for the parity check.

Hence the necessity arises of equipping said control logics with means able to check the correctness of the received sum character. These means are represented in Fig. 19 for logic LC1 of receiver R, the modifications for logic LC2 of generators C being quite the same.

As shown in Fig. 19, the five wires of connection 19 carrying the information bits are connected to respective modulo-2 counters, denoted as a whole by CN6. The modulo-2 counters, as known are apt to effect the sum without carry over.

The outputs of counters CN6 are connected to the inputs of a gate P48, which is an OR gate as shown in the drawing, if the even parity has been chosen, or a NAND gate, if the sum is made with odd parity. The output of P48 is connected to an input of AND gate P49, of which a second input is connected to wire 16 on which the signal of end-of-transmission is present; the output of P49 is connected to an OR gate P47, which has two other inputs connected to wires 17, 18 and the output connected to the set input of FF7. That gate therefore has the same tasks as gate P37 of Fig. 7.

By this arrangement, if everything is regular, the counter outputs must all be at the same logic value; otherwise the output of P48 is 1 and, at the end of transmission, through P47, sets flip-flop FF7 (unless it is already set by a signal on wire 18) signalling the anomaly.

The subscribers shown in the connection diagrams relating to exchanges without computer (Figures 1, 9, 11) are single line subscribers. In case of party-line (shared service) subscribers, two subscribers are connected to the same subscriber's line circuit, and a single identity generator (provided it is located in the exchange) will be used for both subscribers. One bit in one of the characters encoding the identity can then be used to distinguish the two shared-service subscribers. Since memory ROM1 (Fig. 4) can memorize the identity of only one of the two shared-service subscribers, means are necessary to detect when the calling party is the other subscriber and consequently to modify the identity transmitted on the line. Advantageously, memory ROM1 can contain the identity of shared-service subscriber A and means are provided to recognize when the calling party is subscriber B. This is the most advantageous solution because subscriber A is handled in the exchange as a single-line subscriber (as to the voltages on the subscriber's loop wires): therefore the means designed to recognize the call originating from subscriber B, in case they form an element physically distinct from the rest of the generator, must be provided only for shared-service subscribers and not for all subscribers.

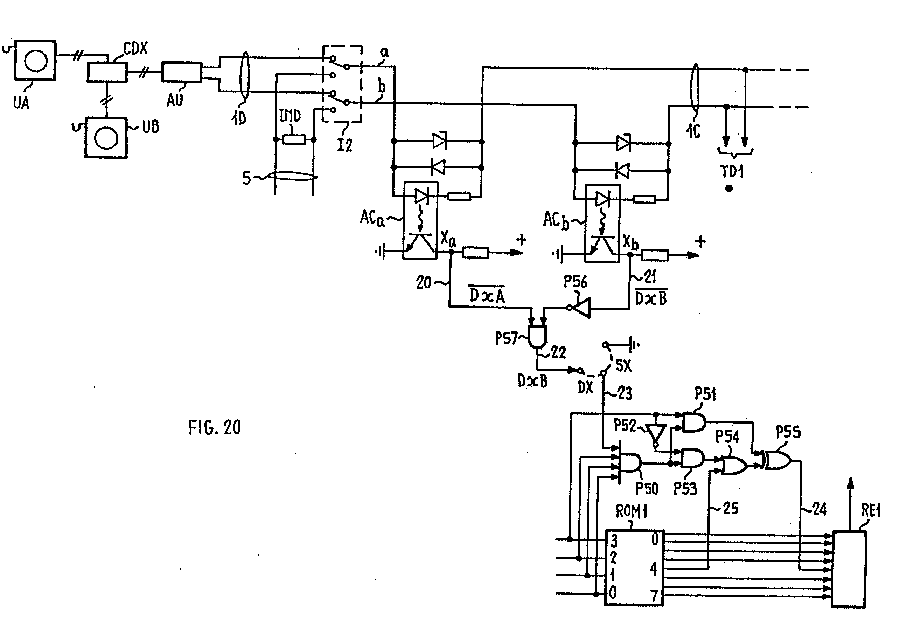

The connection of generator G to the line and the modifications necessary in the same generator to take into account the shared-service subscribers are shown in Fig. 20. By way of example the bit which distinguishes shared-service subscriber A (or the single-line subscriber) from subscriber B is supposed to be the fifth bit of the eighth character: that bit will be assumed to be 0 for the single line subscriber or shared-service subscriber A and 1 for shared-service subscriber B.

In the Figure, UA, UB are two shared-service subscribers connected to privacy box CDX (i.e. a device which prevents either party-line subscriber from beginning a call when the other subscriber is using the telephone and from hearing what the other subscriber is saying) and to the same subscriber's line circuit AU. On wires $a$ and $b$ of the line loop downstream switch I2, there are connected photoelectric couplers ACa, ACb, with protection diodes and resistors connected so that while one of them conducts the other one is cutoff.

In particular ACa, ACb conduct when current flows on the associated wire from the privacy box to the exchange.

The emitters of the phototransistors in ACa, ACb are connected to ground (logic level 0) while the collectors are connected to a positive voltage, through resistors; in addition such collectors are connected to the inputs of an AND gate P57, the first one directly (wire 20) and the second one through inverter P56 (wire 21). The signal present at output 22 of P57, when at logic level 1, indicates the line seizure by subscriber UB.

In case the generator is associated with a party-line subscriber, wire 22 is connected to one end of a wire 23, which at the other end is connected to 4-input AND gate P50. In case of a single-line subscriber, the same end of wire 23 is on the contrary grounded. The other three inputs of P50 are connected to the wires forwarding to ROM1 the three least significant address bits; the wire forwarding the most significant address bit to ROM1 is connected to an input of an AND gate P51 directly and to an input of another AND gate P53 through an inverter P52.

A second input of gates P51, P53 is connected to the output of gate P50, the output of P53 is connected to an input of an OR gate P54, of which a second input is connected to the output wire of ROM1 relevant to the fifth bit. The outputs of P54 and P51 are connected to an EX-OR gate P55, whose output is connected to the fifth cell of register RE1.

The Figure also shows inductance IND, connected between the two wires of the telephone loop 5, which closes the loop to keep the seizure during the transmission by the modem, without being a load for the modem itself.

Supposing that the calling subscriber to be identified is subscriber UA, point Xa is grounded and point Xb is connected to the supply. The output of P57 is then 0, and therefore inhibits P50.

When the eighth character (which is the one which contains the distinctive bit) is addressed in ROM1, the output of P50 remains 0 even if the other 3 inputs are 1, and the same does the output of P53, as this gate receives a 0 from P50 and a 1 from P52 (the address of the eighth character is in fact 0111). As a consequence the output of P54 is 0, as is input 25; as also the output of P51 is 0 (both inputs being 0), output 24 of P55 remains 0, i.e. it has the same logic value as output 25 of ROM1.

When the line is seized by subscriber B, point Xa is at 1 (connected to the supply) and point Xb is 0 (ground). Therefore the output of P56 is 1 and a 1 will be present at the output of P57 on wires 22, 23. When the eighth character is addressed, all the inputs of P50 are 1 and therefore also the output is 1. As the output of P52 is 1, gate P53 is enabled and its output is 1. As a consequence the output of P54 is 1 and, as the output of P51 is 0, output 24 of P55 is 1, as required for a shared-service subscriber. It is to be noted that by the described arrangement the signal on wire 22 is 1 when only point Xb is grounded; if, owing to some unwanted contact, both Xa and Xb are grounded, the seizure is attributed to subscriber A.

The logic network consisting of gates P50 to P55 has been designed assuming that the 16th character is the check character; in this case, when the logic value of the bit stored in ROM1 is inverted to signal the identity of subscriber B, also the sum bit is to be inverted in the 16th character.

This is automatically obtained in the scheme of Fig. 20 because, when the calling subscriber is subscriber B and the 16th character is addressed, the output of P51 is always 1, the output of P53 is always 0, and the output of P54 has the same logic value as the bit on wire 25. This means that, if such a bit is 0, the two inputs of gate P55 have different logic values and then the output of P55 is 1; if the contrary the bit on wire 25 is 1, the output of P55 is 0: the variation of the bit of the 8th character has then been considered. It can be immediately seen that the bits on wires 25, 24 have on the contrary the same logic value when the subscriber is a single-line subscriber or party-line subscriber A, so that the eighth character is transmitted just as stored in ROM1.

If the 16th character instead of being utilized for the check is an information character gates P51, P55 complementing, if necessary, the logic value of the bit of that character present on wire 25, can be dispensed with.

It is evident that the suggested system is valid particularly if it is diffused in the whole network and if for no connection the identity of at least the calling subscriber (or of the point of access to the network) is unknown. That implies a very high quantity of devices to be manufactured and installed and therefore it is vital to limit the cost thereof. This may be obtained by manufacturing the various devices, and more particularly the identity generators and possibly the receivers, as integrated circuits.

The identity generator could comprise an integrated circuit for the memory (ROM or RAM, according to the cases) and an integrated circuit for the logic circuitry (including amplifier, filter, modem and the circuits for discriminating the shared-service subscribers); therefore the integrated circuit would not include the input transformer, the switch and possibly a number of capacitors of the filters and oscillators. The person skilled in the art can easily realize that on the whole a few hundred gates (nearly 300) are to be integrated, so that the circuits can be even implemented with MSI technique.

As to the receiver, its complexity is similar to that of the logic circuitry of the generator; on the other hand in this case the cost is a less important problem both because the receivers are far fewer than the generators and because the nature of the requirements to be met with by the receiver (e.g. judicial investigations) makes the problem not so important.

**Claims**

1. System for forwarding ac modulated identity signals along a line connection in a telephone network, the identity signals informing of the identities of points of origin and/or destination of a telephone call along the connection the system comprising:

— a set of generators of requests for an identity signal transmission (D; D1; D2; D3, D5—D8; Da, Db) associated with points of the network enabled to such a request and comprising a signal frequency oscillator (O1);

— a set of identity generators (G; G1, G2, G3; C1, C2) associated each with such points which can originate the call or give access to the network, each generator comprising means for recognizing an identity request (AM1, BP1, RD1, TR1, IN1; AM3, BP5, RD5, TR5, IN3) and comprising memory means (ME1; ME2) storing the identity signal of the point the generator is associated with, and being capable of automatically forwarding along the connection, upon recognition of a request for identity transmission, the identity of the point it is associated with;

— a set of identity signal receivers (R; R2, R3; R5, R6) associated with a number of network points enabled to the reception,

characterized in that each of said generators of request for an identity signal transmission (D; D1; D2, D3, D5...D8; Da, Db) is connected through a switch (I1) to the telephone line for the whole request duration and comprises a monostable circuit (M1) controlling the request emission and the operation of the switch (I1); that each of said identity signal generators (G; G1, G2, G3; C1, C2) is connected to the telephone line through a differential transformer (TD1; TD3) for picking up from the line the request for an identity signal transmission and through a switch (I2, I3) which breaks the line switching it either towards the connection ends, during the conversation, or towards the generator itself, during the identity transmission; and that each identity signal receiver (R; R2, R3; R5, R6) is connected to the telephone line by means of a differential transformer (TD2) for picking up from the line the signals representing the identity and comprises a random-access memory (ME2) storing the received identity signal.

2. System according to claim 1 characterized in that said identity signal generators and said generators of request for identity transmission forward over the line voice-band signals.

3. System according to claim 1 or 2, characterized in that the points associated with the generators of requests for an identity signal transmission and the points associated with the identity signal receivers are distinct from the points of origin and/or destination of the call.

4. System according to any of claims 1 to 3, characterized in that in each of the identity signal generators (G;, G1, G2, G3; C1, C2), the means for recognizing an identity request consist of the series of an amplifier (AM1; AM3), of pass-band filtering means (BP1; BP5), tuned on the frequency of the frequencies of the request signal, of a detector (RD1; RD5), of a threshold circuit (TR1; TR5) which converts the detected signal into a square wave, and of an integrator (IN1; IN3) apt to distinguish the actual request from noises present on the line; the memory means (ME1; ME3) stores the identity signal of the point the generator is associated with encoded in digital form; and a modem (MD1; MD3) is connected on one side to the memory means (ME1; ME3) and on the other side to the switch (I2; I3), for converting the digital identity signals into the ac signals, before the transmission over the line.

5. System according to claim 4, characterized in that such identity signal is encoded in form of a plurality of characters one of which is a check character whose significant bits represent the binary sum, without carry over, of the significant bits of equal position in all the other characters.

6. System according to claims 4 or 5, characterized in that a bit of one of the characters, excepted the check one, discriminates two shared-service subscribers.

7. System according to any of claims 4 to 6, characterized in that, in case of exchanges which are not equipped with a computer, said memory means (ME1) comprises a read-only-memory (ROM1) whose control circuits are associated with a logic network (SS1) connected to the integrator (IN1), which network establishes the beginning and the end of the identity signal transmission and controls the switch (I2) so that it switches the telephone line towards the modem (MD1) during the transmission.

8. System according to any of claims 4 to 7, characterized in that, in case the points originating the calls correspond to actual subscribers, the relative generator is placed in the exchange at the subscribers's line circuit level.

9. System according to any of claims 4 to 8, characterized in that, in case of two shared-service subscribers, the identity signal of only one of them is stored; in that the identity signal generator (G) is connected to the line also by means (ACa, ACb, P56, P57) apt to signal the seizure by the other subscriber to the memory means; and in that the memory control circuits comprise a logic network (P50, P51, P52, P53, P54, P55) designed to complement the logic value of the distinctive bit upon occurrence of the signal indicating the seizure by said other subscriber.

10. System according to claim 9, characterized in that the means complementing the logic value of the distinctive bit complement also the corresponding bit in the check character.

11. System according to any of claims 4 to 6, characterized in that for computer-assisted exchanges the means (AM3, BP5, RD5, TR5, IN3) capable of recognizing an identity signal transmission request forward the recognized requests to the computer; in that the memory means (ME3) comprise a random access memory (RAM2) wherein the requested identity signal is written by the computer, and are associated with a logic network (LC2) which checks the regularity of the identity signal transmission by the computer and enables the reading if the transmission has proved regular, or requires the computer to repeat the transmission for a pre-determined number of times, if the transmission was irregular.

12. System according to claim 11, characterized in that the identity signal generator, in case the points of origin of the calls are subscribers' sets connected to computer-assisted exchanges, is associated with a cord and serves all the subscribers which become connected to that cord.

13. System according to claim 2 or any of claims 3 to 12 back-referenced to claim 2, characterized in that for the identity signal transmission requests generated by network points connected to subscribers' sets, said voice-band request generator (D, D2, D3, D7, D8) is placed in the exchange, downstream the identity generator (G2, G3; C1, C2) relative to the same subscriber, is controlled by a generator (T; T2, T3; T7) of signals out of the voice-band located at the subscriber's (U2, U3; U7) and is associated with filtering means (F; F2, F3; F7; F8), separating the speech from the out-of-band signalling and converting the latter into a control signal for said monostable (M1).

14. System according to claim 13, characterized in that for subscribers connected to computer-assisted exchanges, said request generator (D7, D8) is associated with a cord and serves all the subscribers which become connected to that cord.

15. System according to claim 2 or any of claims 3 to 12 back-referenced to claim 2, characterized in that for the identity signal transmission requests generated by network points connected to subscribers' sets, said voice-band request generator (D5, D6) is placed in the exchange, at the subscriber's line circuit level, is controlled by a generator (T5, T6) of out-of-voice-band signals and placed at the subscriber's (U5, U6) and is associated with filtering means (FI5, FI6) separating the

speech from the out-of-band signalling, converting the latter into a control signal for said monostable (M1) and signalling the occurred seizure of the filtering means to the computer, to allow the disabling of the identity signal generator (C1, C2) relative to the same subscriber.

16. System according to any of claims 1 to 15, characterized in that each of the identity signal receivers (R; R2, R3; R5, R6) comprises:

— means apt to recognize the arrival of the identity signals, consisting of the series of an amplifier (AM2), of pass-band filtering means (BP2, BP3) tuned on the frequency or frequencies used for the identity signal transmission, of signal detecting means (RD2, RD3), of threshold means (TR2, TR3) converting into square wave(s) the detected signals, and of an integrator (IN2) distinguishing the actual identity signals from spurious signals present on the line;

— a logic network (LC1) associated with the memory to check the transmission regularity;

— means (MV) apt to receive from the memory (ME2), to record and/or display the received identity signal, said means (MV) being also apt to receive from the logic network (LC1) signals denoting the transmission regularity or irregularity.

17. System according to claim 16, characterized in that in the computer-assisted exchanges the receivers associated with the subscribers enabled are associated with a cord and serve all the subscribers which become connected to that cord.

18. System according to any previous claim, characterized in that at least the identity signal generators (G; G1, G2, G3; C1, C2) are manufactured as integrated circuits, a first integrated circuit comprising the memory (ROM1, RAM2) and a second integrated circuit comprising the remaining generator circuitry.

19. System according to claim 18, characterized in that also the receiver (R; R2; R3; R5, R6) is manufactured as integrated circuits a first integrated circuit comprising the memory (RAM1) and a second integrated circuit comprising the remaining receiver circuitry.

**Patentansprüche**

1. System zum Senden von wechselstrommodulierten Identitässignalen, die über die Identität des Entstehungspunkts und/oder des Zielpunkts eines Fernsprechanrufs auf einer Leitungsverbindung in einem Fernsprechnetz informieren, entlang der Leitungsverbindung, mit folgenden Bestandteilen:

— einer Gruppe von Anforderungsgeneratoren (D; D1; D2; D3, D5 ... D8; Da, Db), die Anforderungen für das Senden eines Identitätssignals erzeugen und die Netzpunkten, welche für eine solche Anforderung befähigt sind, zugeordnet sind und einen Signalfrequenzoszillator (O1) enthalten;

— einer Gruppe von Identitätssignalgeneratoren (G; G1, G2, G3; C1, C2), die jeweils solchen Punkten zugeordnet sind, welche den Anruf beginnen oder Zugang zum Netz geben können, wobei jeder Generator Einrichtungen (AM1, BP1, RD1, TR1, IN1; AM3, BP5, RD5, TR5, IN3) zum Erkennen einer Identitätsanforderung und Speichereinrichtungen (ME1; ME2), die das Identitätssignal desjenigen Punkts, dem der Generator zugeordnet ist, speichern, umfaßt und auf die Erkennung einer Anforderung für das Senden eines Identitätssignals automatisch entlang der Leitung die Identität des Punkts, dem der betreffenden Generator zugeordnet ist, senden kann;

— einer Gruppe von Identitätssignalempfängern (R; R2, R3; R5, R6), die einer Anzahl Punkten des Netzes zugeordnet sind, die zum Empfang der Identitätssignale befähigt sind,

dadurch gekennzeichnet, daß jeder der Anforderungsgeneratoren (D; D1, D2, D3, D5 ... D8; Da, Db) von Anforderungen für das Senden eines Identitätssignals über einen Schalter (I1) für die gesamte Dauer des Anordnung mit der Fernsprechleitung verbunden ist und eine monostabile Schaltung (M1) umfaßt, die die Emmission der Anforderung und den Betrieb des Schalters (I1) steuert; daß jeder der Identitätssignalgeneratoren (G; G1, G2, G3; C1, C2) mit der Fernsprechleitung über einen Differentialtransformator (TD1; TD3) verbunden ist, um von der Leitung die Anforderung für das Senden eines Identitätssignals abzugreifen, und über einen Schalter (I2, I3) verbunden ist, der Leitung unterbricht, indem er sie entweder während des Gesprächs an die Verbindungsenden anschließt oder während des Sendens des Identitätssignals an den Generator selbst anschließt; und das jeder Identitätssignalempfänger (R; R2, R3; R5, R6) mit der Fernsprechleitung über einen Differentialtransformator (TD2) verbunden ist, um von der Leitung die die Identität wiedergebenden Signale aufzunehmen, und einen zugriffsfreien Speicher (ME2) umfaßt, der das empfangene Identitätssignal speichert.

2. System nach Anspruch 1, dadurch gekennzeichnet, daß die Identitätssignalgeneratoren und die Anforderungsgeneratoren auf die Leitung Signale im Sprechband abgeben.

3. System nach Anspruch 1 oder 2, dadurch gekennzeichnet, daß die den Anforderungsgeneratoren zugeordneten Punkte und die den Identitätssignalempfängern zugeordneten Punkte andere Punkte als die Punkte der Entstehung und/oder des Ziels des Anrufs sind.

4. System nach einem der Ansprüche 1 bis 3, dadurch gekennzeichnet, daß in jedem der Identitätssignalgeneratoren (G; G1, G2, G3; C1, C2) die Einrichtungen zum Erkennen einer Identitätsanforderung aus der Serienschaltung eines Verstärkers (AM2; AM3), einer Paßbandfiltereinrichtung (BP1; BP5), die auf die Frequenz oder Frequenzen des Anforderungssignals abgestimmt ist, eines Detektors (RD1; RD5), einer Schwellenschaltung (TR1; TR5), die das festgestellte Signal in eine Rechteckwelle umwandelt, und einem Integrator (IN1; IN3), der die tatsächliche Anforderung von auf der Leitung liegenden Rauschstörungen unterscheiden kann, besteht; daß die Speichereinrichtungen (ME1; ME3) das in digitaler Form kodierte Identitätssignal des Punkts, dem der Generator zugeordnet ist, speichern; und daß ein Modem (MD1; MD3) einerseits mit den Speichereinrichtungen (ME1; ME3) und andererseits mit dem Schalter (I2; I3) verbunden ist und dem Umwandeln der digitalen Identitätssignale in die Wechselstromsignale vor dem Senden über die Leitung dient.

5. System nach Anspruch 4, dadurch gekennzeichnet, daß das Identitätssignal in Form einer Mehrzahl von Zeichen kodiert ist, von denen eines ein Überprüfungszeichen ist, dessen bedeutungsvolle Bits die binäre Summe ohne Übertrag der bedeutungsvollen Bits gleicher Position in allen anderen Zeichen angeben.

6. System nach Anspruch 4 oder 5, dadurch gekennzeichnet, daß ein Bit eines der Zeichen mit Ausnahme des Überprüfungszeichen zwischen zwei Teilnehmern mit geteiltem Anschluß unterscheidet.

7. System nach einem der Ansprüche 4 bis 6, dadurch gekennzeichnet, daß im Fall von nicht mit einem Datenverarbeiter ausgestatteten Vermittlungsstellen die Speichereinrichtungen (ME1) einen Festwertspeicher (ROM1) umfassen, dessen Steuerschaltungen mit einer logischen Schaltung (SS1) verbunden sind, die an den Integrator (IN1) angeschlossen ist und den Beginn und das Ende des Identitätssignalsendens festlegt und den Schalter (I2) so steuert, daß er während des Sendens die Fernsprechleitung an das Modem (MD1) anschließt.

8. System nach einem der Ansprüche 4 bis 7, dadurch gekennzeichnet, daß im Fall, daß die Punkte, von denen die Anrufe ausgehen, tatsächlichen Teilnehmern entsprechen, der entsprechende Generator in der Vermittlungsstelle auf der Ebene der Leitungsschaltung des Teilnehmers angeordnet ist.

9. System nach einem der Ansprüche 4 bis 8, dadurch gekennzeichnet, daß im Fall zweier Teilnehmer mit geteiltem Anschluß das Identitätssignal nur eines von ihnen gespeichert ist; daß der Identitätssignalgenerator (G) an die Leitung auch durch Einrichtungen (ACa, ACb P56, P57) angeschlossen ist, die den Speichereinrichtungen die Belegungen durch andere Teilnehmer signalisieren; und daß die Steuerschaltungen der Speichereinrichtungen eine logische Schaltung (P50, P51, P52, P53, P54, P55) umfassen, die gemäß ihrer Schaltung beim Auftreten des die Belegung durch den anderen Teilnehmer anzeigenden Signals den booleschen Wert des unterscheidenden Bits komplementiert.

10. System nach Anspruch 9, dadurch gekennzeichnet, daß die den booleschen Wert des unterscheidenden Bits komplementierende Einrichtung auch das entsprechende Bit im Überprüfungszeichen komplementiert.

11. System nach einem der Ansprüche 4 bis 6, dadurch gekennzeichnet, daß bei durch einen Datenverarbeiter unterstützten Vermittlungsstellen die die Anforderung für das Senden des Identitätssignals erkennende Einrichtung (AM3, BP5, RD5, TR5, IN3) die erkannten Anforderungen an den Datenverarbeiter weitergibt; und daß die Speichereinrichtungen (ME3) einen Speicher (RAM2) mit wahlfreiem Zugriff umfassen, in den das angeforderte Identitätssignal vom Datenverarbeiter eingeschrieben wird, und mit einer logischen Schaltung (LC2) verbunden sind, die die Regelmäßigkeit des Identitätssignalsendens durch den Datenverarbeiter überprüft und, wenn sich das Senden als regulär erweisen hat, das Lesen in Gang setzt, oder, wenn das Senden irregulär war, den Datenverarbeiter veranlaßt, das Senden eine gegebene Anzahl von Malen zu wiederholen.

12. System nach Anspruch 11, dadurch gekennzeichnet, daß im Fall, daß die Punkte, von denen die Anrufe ausgehen, mit der datenverarbeiterunterstützten Vermittlungsstelle verbundene Teilnehmerapparate sind, der Identitätssignalgenerator einer Schnur zugeordnet ist und für alle Teilnehmer dient, die mit dieser Schnur verbunden werden.

13. System nach Anspruch 2 oder nach einem der auf Anspruch 2 rückbezogenen Ansprüche 3 bis 12, dadurch gekennzeichnet, daß dür die von den mit Teilnehmerapparaten verbundenen Netzpunkten erzeugten Anforderungen für das Senden des Identitätssignals der im Sprechband sendende Anforderungsgenerator (D, D2, D3, D7, D8) in der Vermittlungsstelle in Informationsflußrichtung unterhalb des auf den selben Teilnehmer bezogenen Identitätssignalgenerators (G2, G3; C1, C2) angeordnet ist, durch einen Generator (T; T2, T3; T7) von außerhalb des Sprechbands liegenden Signalen, der beim Teilnehmer (U2, U3; U7) angeordnet ist, gesteuert wird, und mit einer Filtereinrichtung (F; F2, F3; F7; F8) versehen ist, die die Sprechsignale von den außer Band liegenden Signalisierungen trennt und die letzteren in ein Steuersignal für die monostabile Schaltung (M1) unwandelt.

14. System nach Anspruch 13, dadurch gekennzeichnet, daß für Teilnehmer, die an durch einen Datenverarbeiter unterstützte Vermittlungsstellen angeschlossen sind, der Anforderungsgenerator (D7, D8) einer Schnur zugeordnet ist und für alle Teilnehmer dient, die mit dieser Schnur verbunden werden.

15. System nach Anspruch 2 oder nach einem der auf Anspruch 2 rückbezogenen Ansprüche 3 bis 12, dadurch gekennzeichnet, daß für die Identitätssignalanforderungen, die von mit Teilnehmerapparaten verbundenen Netzpunkten ausgehen, der im Sprechband sendende Anforderungsgenerator (D5, D6) in der Vermittlungsstelle auf der Ebene der Leitungsschaltungen des Teilnehmers angeordnet ist, von einem beim Teilnehmer (U5, U6) angeordneten, Signale außerhalb des Sprechbands sendenden Generator (T5, T6) gesteuert ist und mit Filtereinrichtungen (F15, F16) ausgestattet ist, die das Sprechsignal von der außer Band liegenden Signalisierung trennen, die letzteren in ein Steuersignal für die monostabile Schaltung (M1) unwandeln und die erfolgte Belegung der Filtereinrichtungen an den Datenverarbeiter melden, damit der zum selben Teilnehmer gehörende Identitätssignalgenerator (C1, C2) gesperrt werden kann.

16. System nach einem der Ansprüche 1 bis 15 dadurch gekennzeichnet, daß jeder der Identitätssignalempfänger (R; R2, R3; R5, R6) folgende Einzelschaltungen umfaßt:

— Einrichtungen zum Erkennes des Eintreffens der Identitätssignale, bestehend aus einer Reihenschaltung eines Verstärkers (AM2), von auf die für das Identitätssignalsenden verwendete Frequenz oder Frequenzen abgestimmten Paßband-Filtereinrichtungen (BP2, BP3), von Signaldetektoreinrichtungen (RD2, RD3), von die festgestellten Signale in Rechteckspannung(en) unwandelnden Schwelleneinrichtungen (TR2, TR3) und eines Integrators (IN2), der der Unterscheidung wirklicher Identitätssignale von auf der Leitung vorhandenen Rauschsignalen dient;

— eine dem Speicher zugeordnete logische Schaltung (LC1) zum Überprüfen der Regelmäßigkeit des Sendens;

— Einrichtungen (MV), die von Speicher (ME2) empfangen können, das empfangene Identitätssignal aufzeichnen und/oder darstellen und die auch von der logischen Schaltung (LC1) Signale empfangen können, die die Regelmäßigkeit oder Unregelmäßigkeit der Übertragung anzeigen.

17. System nach Anspruch 16, dadurch gekennzeichnet, daß in von einem Datenverarbeiter unterstützten Vermittlungsstellen die den befähigten Teilnehmern zugeordneten Empfänger einer Schnur zugeordnet sind und für alle Teilnehmer dienen, die mit dieser Schnur verbunden werden.

18. System nach einem der vorhergehenden Ansprüche, dadurch gekennzeichnet, daß wenigstens die Identitätssignalgeneratoren (G; G1, G2, G3; C1, C2) als integrierte Schaltkreise Hergestellt sind, wobei ein erster integrierter Schaltkreis den Speicher (ROM1, RAM2) und ein zweiter integrierter Schaltkreis die übrige Generatorschaltung umfaßt.

19. System nach Anspruch 18, dadurch gekennzeichnet, daß auch der Identitätssignalempfänger (R; R2; R3; R5, R6) als integreierte Schalkreise hergestellt ist, wobei ein erster integrierter Schaltkreis den Speicher (RAM1) und ein zweiter integrierter Schaltkreise die übrige Empfängerschaltung umfaßt.

**Revendications**

1. Système pour l'envoi de signaux modulés d'identité en courant alternatif, le long d'une liaison sur une ligne d'un réseau téléphonique, les quels signaux d'identité informent de l'identité des points d'origine et/ou destination d'un appel téléphonique acheminé le long de la liaison, le système comportant:

— un ensemble de générateurs de requêtes de transmission d'un signal d'identité (D, D1; D2; D3, D5—D8; Da, Db), associés à des points du réseau autorisés à ladite requête et comprenant un oscillateur (O1) à la frequence du signal;
— un ensemble de générateurs d'identité (G; G1, G2, G3; C1, C2) dont chacun est associé à des points qui peuvent engendrer l'appel ou donner accès au réseau, chaque générateur comprenant des moyens pour reconnaître une requête d'identité (AM1, BP1, RD1, TR1, IN1; AM3, BP5, RD5, TR5, IN3), comprenant des unités de mémoire (ME1, ME3) qui stockent l'identité du point auquel le générateur est associé, et pouvant transmettre automatiquement le long de la liaison l'identité du point associé, d'après la reconnaissance d'une requête de transmission d'identité;
— un ensemble de récepteurs d'identité (R; R2, R3; R5, R6) associés à des points du réseau autorisés à recevoir,

caractérisé en ce que chacun desdits générateurs de requêtes de transmission d'un signal d'identité (D; D1; D2, D3, D5 ... D8; Da, Db) est connecté à l'aide d'un commutateur (I1) à la ligne téléphonique pour la durée entière de la requête et comprend un circuit monostable (M1) qui commande l'émission des requêtes et l'opération du commutateur (I1); en ce que chacun desdits générateurs de signaux d'identité (G; G1, G2, G3; C1, C2) est connecté à la ligne téléphonique à l'aide d'un transformateur différentiel (TD1, TD3) pour prélever de la ligne la requête de transmission d'un signal d'identité et à l'aide d'un commutateur (I2, I3) qui coupe la ligne en la commutant vers les extrémités de la liaison pendant la conversation ou vers le générateur, pendant la transmission de l'identité, et en ce que chaque récepteur de signaux d'identité (R; R2, R3; R5, R6) est connecté à la ligne téléphonique au moyen d'un transformateur différentiel (TD2) pour prélever de la ligne les signaux qui représentent l'identité et comprend une mémoire vive (ME2) pour stocker le signal d'identité reçu.

2. Système suivant la revendication 1, caractérisé en ce que lesdits générateurs de signaux d'identité et lesdits générateurs de requêtes de transmission d'identité transmettent sur la ligne des signaux en bande vocale.

3. Système suivant les revendications 1 ou 2, caractérisé en ce que les points associés aux générateurs de requêtes de transmission d'identité et les points associés aux récepteurs de signaux d'identité diffèrent des points d'origine et/ou destination de l'appel.

4. Système suivant l'une quelconque des revendication 1 à 3, caractérisé en ce qu'en chaque générateur de signaux d'identité (G; G1, G2, G3; C1, C2) les moyens pour reconnaître une requête d'identité sont constitués par la série d'un amplificateur (AM1; AM3), d'un système de filtrage passe-bande (BP1; BP5), accordé sur la fréquence ou les fréquences du signal de requête, d'un détecteur (RD1; RD5), d'un circuit à seuil (TR1, TR5) qui transforme le signal détecté dans une onde carrée, et d'un intégrateur (IN1, IN3) apte à distinguer les requêtes réelles des bruits présents sur la ligne; les unités de mémoire (ME1, ME3) stockent le signal d'identité du point auquel le générateur est associé, codé sous forme numérique; et un modem (MD1, MD3) est connecté d'un côté aux unités de mémoire (ME1, ME2) et de l'autre côte au commutateur (I2, I3), pour la conversion des signaux numériques d'identité dans les signaux en courant alternatif, avant la transmission sur la ligne.

5. Système suivant la revendication 4, caractérisé en ce que le signal d'identité est codé sous forme d'une pluralité de caractères, l'un d'eux étant un caractère de contrôle dont les bits significatifs représentent la somme binaire, sans retenue, des bits significatifs ayant la même position dans tous les autres caractères.

6. Système suivant les revendications 4 ou 5, caractérisé en ce qu'un bit d'un des caractères, sauf celui de contrôle, discrimine deux abonnés partageant la même ligne.

7. Systeme suivant l'une quelconque des revendications 4 à 6, caractérisé en ce que, pour des centraux qui ne sont pas équipés d'un ordinateur, ladite unité de mémoire (ME1) comprend une mémoire morte (ROM1) dont les circuits de commande sont associés à un réseau logique (SS1) connecté avec l'intégrateur IN1), qui établit le commencement et la fin de la transmission du signal d'identité et commande le commutateur (I2) de manière à connecter la ligne téléphonique au modem (MD1) pendant la transmission.

8. Système suivant l'une quelconque des revendications 4 à 7, caractérisé en ce que, au cas où les points qui engendrent les appels correspondent à des abonnés réels, le générateur correspondant est placé dans le central au niveau des circuits d'abonné.

9. Système suivant l'une quelconque des revendications 4 à 8, caractérisé en ce que, au cas de deux abonnés partageant la même ligne, le signal d'identité d'un seul d'eux est stocké en mémoire; en ce que le générateur du signal d'identité (G) est connecté à la ligne aussi par des moyens (ACa, ACb, P56, P57) capables de signaler aux unités de mémoire la prise de la ligne par l'aure abonné; et en ce que les circuits de commande de la mémoire comprennent un réseau logique (P50, P51, P52, P53, P54, P55) destiné à inverser la valeur logique du bit de discrimination en présence du signal qui dénote la prise par l'autre abonné.

10. Système suivant la revendication 9, caractérisé en ce que les moyens qui inversent la valeur logique du bit de discrimination inversent de même le bit correspondant dans le caractère de contrôle.

11. Système suivant l'une quelconque des revendications 4 à 6, caractérisé en ce que pour des centraux équipés d'un ordinateur les moyens (AM3, BP5, RD5, TR5, IN3) capables de reconnaître une requête de transmission du signal d'identité transmettent les requêtes reconnues à l'ordinateur; en ce que les unités de mémoire (ME3) comprennent une mémoire vive (RAM2) où le signal d'identité demandé est écrit par l'ordinateur, et sont associées à un réseau logique (LC2) qui contrôle la régularité de la transmission du signal d'identité par l'ordinateur et permet la lecture si la transmission d'est démontrée régulière, ou demande à l'ordinateur de répéter la transmission pour un nombre de fois prédéterminé, si la transmission n'était pas régulière.

12. Système suivant la revendication 11, caractérisé en ce que le générateur du signal d'identité au cas où les points d'origine des appels sont des appareils d'abonné connectés à des centraux équipés d'un ordinateur, est associé à un cordon et sert tous les abonnés qui se connectent à ce cordon.

13. Système suivant la revendication 2 ou l'une quelconque des revendications 3 à 12 référées à la revendication 2, caractérisé en ce que, au cas des requêtes de transmission de signaux d'identité engendrées par des points du réseau connectés à des appareils d'abonné, ledit générateur de requêtes en bande vocale (D, D2, D3, D7, D8) est placé dans le central, en aval du générateur d'identité (G2, G3; C1, C2) associé au même abonné, est commandé par un générateur (T; T2, T3; T7) de signaux hors de la bande vocale placé chez l'abonné (U2, U3; U7) et est associé à des moyens de filtrage (F; F2, F3; F7; F8) qui séparent la voix de la signalisation hors bande et transforment celle-ci dans un signal de commande pour ledit monostable (M1).

14. Système suivant la revendication 13, caractérisé en ce que, pour des abonnés connectés à des centraux équipés d'un ordinateur, ledit générateur de requêtes (D7, D8) est

**0 059 469**

associé à un cordon et sert tous les abonnés qui se connectent à ce cordon.

15. Système suivant la revendication 2 ou l'une quelconque des revendications 3 à 12 référées à la revendication 2, caractérisé en ce que pour les requêtes de transmission de signaux d'identité engendrées par des points du réseau connectés à des appareils d'abonné, ledit générateur de requêtes en bande vocale (D5, D6) est placé dans le central, au niveau du circuit d'abonné, est commandé par un générateur (T5, T6) de signaux hors de la bande vocale placé chez l'abonné (U5, U6) et est associé à des moyens de filtrage (F15, F16) qui séparent la voix de la signalisation hors bande, transforment celle-ci dans un signal de commande pour ledit monostable (M1) et signalent à l'ordinateur la prise des moyens de filtrage, pour permettre l'inhibition du générateur de signaux d'identité (C1, C2) associé au même abonné.

16. Système suivant l'une quelconque des revendications 1 à 15, caractérisé en ce que chaque récepteur de signaux d'identité (R; R2, R3; R5, R6) comprend:

— des moyens aptes à reconnaître l'arrivée des signaux d'identité, constitués par la série d'un amplificateur (AM2), de moyens de filtrage passe-bande (BP2; BP3) accordés sur la fréquence ou les fréquences employées pour la transmission des signaux d'identité, de détecteurs des signaux (RD2, RD3), de moyens à seuil (TR2, TR3) pour convertir en onde carrée (en des ondes carrées) le signaux détects, et d'un intégrateur (IN2) qui discrimine les signaux réels d'identité des bruits présents sur la ligne;

— un réseau logique (LC1) associé à la mémoire pour contrôler la régularité de la transmission;

— des moyens (MV) aptes à recevoir de la mémoire (ME2), enregistrer et/ou visualiser l'identité reçue, lesdits moyens (MV) étant de même aptes à recevoir du réseau logique (LC1) des signaux qui indiquent la régularité ou le manque de régularité de la transmission.

17. Système suivant la revendication 16, caractérisé en ce que dans les centraux équipés d'un ordinateur les récepteurs associés aux abonnés autorisés sont associés à un cordon et servent tous les abonnés qui se connectent à ce cordon.

18. Système suivant l'une quelconque des revendications précédentes, caractérisé en ce qu'au moins les générateurs de signaux d'identité (G; G1, G2, G3; C1, C2) sont fabriqués comme des circuits intégrés, un premier circuit intégré comprenant la mémoire (ROM1, RAM2) et un second circuit intégré comprenant les autres circuits du générateur.

19. Système suivant la revendication 18, caractérisé en ce que le récepteur aussi (R; R2; R3; R5, R6) est réalisé au moyen de circuits intégrés, un premier circuit intégré comprenant la mémoire (RAM1) et un second circuit intégré comprenant les autres circuits de récepteur.

FIG. 1

FIG. 2

FIG. 3

G

D

0059 469

FIG. 4

0 059 469

2

FIG. 5

0 059 469

3

FIG. 6

FIG. 8

0059 469

**0 059 469**

FIG. 7

FIG. 9

FIG. 11

FIG.10

FIG.12

FIG.13

0059469

FI5, FI6

FIG.14

FIG.15

FIG.16

C1, C2

0059469

**0 059 469**

FIG. 17

FIG. 18

FIG. 19

0059469

FIG. 20